# FASCICULE DE BREVET EUROPEEN

(11) **EP 0 511 911 B1**
(45) Date de publication et mention de la délivrance du brevet: **10.07.1996**
(21) Numéro de dépôt: 92401204.0
(22) Date de dépôt: 27.04.1992
(51) Int. Cl.: F16B 43/00, H01F 7/13

(54) **Dispositif de fixation de bobines d'électrovannes**
Befestigungsvorrichtung für Spulen von Magnetventilen
Fastening device for solenoid valve coils

(30) Priorité: 29.04.1991 FR 9105240
(43) Date de publication de la demande: 04.11.1992
(73) Titulaire: SUNTEC INDUSTRIES FRANCE (SA), F-21600 Longvic (FR)
(72) Inventeur: Canillac, Henri, F-21100 Dijon (FR)
(74) Mandataire: Bruder, Michel

(56) Documents cités:
- EP-A- 0 195 868
- DE-A- 3 022 391
- FR-A- 2 253 940
- US-A- 4 175 804

## Description

La présente invention concerne un dispositif de fixation de bobines d'électrovannes.

Les divers types de dispositifs destinés à la fixation d'une bobine sur le tube d'une électrovanne se sont avérés jusqu'à présent inopérants pour des raisons de fiabilité ou de maniabilité. En particulier, il a été proposé de munir l'extrémité du tube d'une électrovanne d'un filetage épaulé autour duquel on vient emmancher une rondelle ondulée serrée sur la bobine par un écrou. Or, sous l'effet des vibrations causées par le circuit magnétique de la bobine et des chocs dus aux ouvertures et fermetures de l'électrovanne, l'écrou de serrage peut se desserrer, l'utilisateur étant ainsi contraint à un resserrage périodique de cet écrou.

Par ailleurs, soit pour des raisons pratiques dues à une modification de l'environnement où se trouve l'électrovanne, soit lorsqu'il convient de modifier la direction du câble d'alimentation de la bobine, il est parfois nécessaire de réorienter la bobine entourant le tube d'une électrovanne sans pour autant intervenir sur le système de serrage. Or, dans le cas précédent d'une fixation du tube par le moyen d'une rondelle ondulée serrée sur la bobine par un écrou, si une rotation à droite de la bobine ne peut entraîner de sur-serrage, une rotation à gauche peut encore entraîner le desserrage de l'écrou avec, comme conséquence, une émission de bruits causés par les vibrations du circuit magnétique de la bobine.

Une autre solution pour la fixation d'une bobine autour du tube d'une électrovanne consiste à employer un clip élastique, encliqueté sur le tube et pressant la bobine. Si cette solution ne présente pas les inconvénients précédents du desserrage toujours possible d'un écrou de blocage, elle présente des défauts importants en raison, d'une part des limitations de variabilité élastique du clip et, d'autre part, du fait que la rainure du clip se fragilise et constitue une zone d'affaiblissement variant dimensionnellement dans le temps sous un phénomène de fluage, réduisant par là-même la force de serrage procurée par ledit clip. Enfin, le démontage d'un tel clip est assez délicat et, à l'arrachement, il arrive fréquemment que cette pièce se perde.

La présente invention vise à remédier à ces inconvénients en proposant un dispositif pour la fixation d'une bobine autour du tube d'une électrovanne, caractérisée en ce qu'il comporte un moyen élastique pouvant être fixé de manière amovible sur le tube de l'électrovanne de manière à assurer une pression de serrage axiale constante sur la bobine, ce moyen élastique comportant à sa partie inférieure une surface de glissement en contact avec ladite bobine permettant la réorientation de cette dernière après serrage.

Suivant une variante préférée de l'invention, le moyen élastique est fixé solidairement sur le tube de l'électrovanne par un écrou serré contre une rondelle frein agencée à la partie supérieure dudit moyen élastique.

Selon une forme de réalisation préférée de l'invention, le moyen élastique est constitué par le jeu de plusieurs bras flexibles reliant la rondelle frein supérieure à une surface de glissement du type d'une couronne annulaire inférieure pouvant glisser sur la bobine lors d'une réorientation du tube par rapport à cette dernière.

Une telle réalisation simplifie l'obtention du dispositif de fixation conforme à l'invention puisqu'il permet de réaliser le moyen élastique en une seule pièce par découpe et emboutissage dans un flan plat d'acier à ressort qui est ensuite développé dans une direction orthogonale pour former une rondelle élastique sensiblement tronconique.

Les bras flexibles réalisés par emboutissage peuvent présenter des formes diverses et une orientation radiale ou non. A cet effet, dans le cas où la rondelle frein supérieure est reliée à la couronne de glissement inférieure par des bras purement radiaux, la flexibilité est peu importante car les bras flexibles sont nécessairement courts, sauf à prévoir un diamètre de rondelle important. Au contraire, suivant une variante préférée de la présente invention, les bras flexibles sont disposés entre la couronne de glissement inférieure et la rondelle frein supérieure de sorte à leur donner la plus grande longueur possible, ce qui permet d'obtenir une grande flexibilité du moyen élastique ainsi constitué. Dans un exemple de réalisation non limitatif de la présente invention, on choisit de réaliser ces bras flexibles par une découpe de forme polygonale s'inscrivant dans un cercle concentrique du cercle délimitant la circonférence extérieure de la couronne de glissement inférieure. A cet égard, on pourra prévoir une découpe hexagonale procurant six bras flexibles entre la rondelle frein supérieure et la couronne de glissement inférieure. Cette réalisation offre l'avantage supplémentaire de pouvoir immobiliser le dispositif de fixation par rapport à l'écrou lors du serrage du tube de l'électrovanne sur la bobine.

Bien entendu, les bras flexibles joignant la couronne de glissement inférieure et la rondelle frein supérieure pourraient être de forme quelconque, autre que polygonale et par exemple curviligne.

Les caractéristiques et avantages de la présente invention ressortiront mieux de la description qui va suivre d'un mode de réalisation donné à titre d'exemple non limitatif d'un dispositif pour la fixation d'une bobine autour du tube d'une électrovanne en référence aux dessins annexés sur lesquels :
- la figure 1 est une vue en perspective d'un dispositif de fixation conforme à la présente invention,
- la figure 2 est une vue en plan de la rondelle frein élastique représentée sur la figure 1,
- la figure 3 est une vue latérale du tube d'une électrovanne sur laquelle on a fixé une bobine au moyen d'un écrou et de la rondelle frein élastique représentée sur la figure 1.

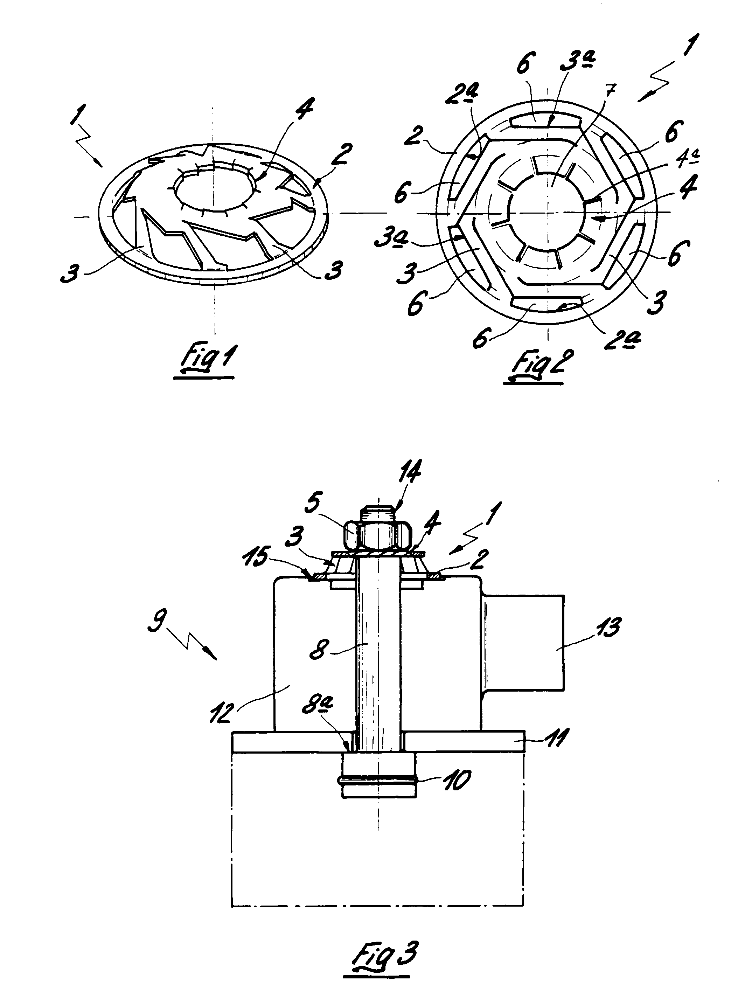

Sur la figure 1, on a représenté un des deux éléments constitutifs d'un dispositif de fixation conforme à la variante préférée de l'invention, à savoir une rondelle frein élastique 1 tronconique comportant une couronne de glissement inférieure 2 reliée par des bras flexibles 3 à une rondelle frein supérieure 4 pouvant coopérer avec un écrou 5 tel que représentée sur la figure 3. La rondelle frein supérieure 4 est ici constituée d'une manière conventionnelle par une rondelle à crans, à denture intérieure. Il va de soi qu'on pourrait substituer à cette rondelle frein 4 à crans tout autre type de rondelle frein remplissant la même fonction et procurant le même résultat, et par exemple une rondelle éventail.

Suivant le mode de réalisation figuré, les bras flexibles 3 sont réalisés par emboutissage et découpe dans un flan plat en acier à ressort. A cet égard, conformément à la figure 2, la rondelle frein élastique 1 est découpée sous la forme d'un disque dans lequel on réalise six lumières 6 à symmétrie hexagonale délimitant, d'une part, les bords rectilignes extérieurs 3a des bras flexibles 3 et, d'autre part, les bords curvilignes intérieurs 2a de la couronne de glissement inférieure 2. La rondelle frein supérieure 4 est, quant à elle, obtenue à partir d'une découpe centrale concentrique 7 d'où partent de petites découpes radiales 4a procurant, par déformation, les crans de la denture intérieure de ladite rondelle frein 4. Cette disposition de l'invention n'est pas absolument nécessaire mais apporte une sécurité totale contre le desserrage de l'écrou 5 après son montage sur le tube 8 de l'électrovanne 9, ce montage étant schématisé sur la figure 3.

En se référant à cette dernière figure, on comprendra mieux les avantages procurés par la présente invention ; l'électrovanne 9 y est partiellement représentée par son tube 8 qui vient se fixer, d'une manière étanche, sur un système à clapet non représenté sur la figure au moyen d'un joint torique 10. Le tube 8 de l'électrovanne 9 présente, du côté de la vanne, un épaulement inférieur 8a venant serrer une bride d'assemblage 11 contre une bobine d'induction 12 alimentée latéralement au niveau d'une prise de raccordement électrique 13. A l'opposé de la vanne, la partie supérieure du tube 8 comporte un filetage épaulé 14 sur lequel on vient tout d'abord emmancher la rondelle frein élastique 1 représentée sur la figure 1 avant d'y visser à fond un écrou 5. De cette manière, tout desserrage de cet écrou 5 est impossible en service. Un des avantages principaux de la présente invention résulte de ce que les bras flexibles 3 joignant la couronne de glissement inférieure 2 à la rondelle frein supérieure 4 présentent une grande flexibilité et une course permettant un rattrapage de jeu très important.

La bobine 12 est réalisée conformément à des procédés par ailleurs parfaitement connus. Néanmoins, afin de faciliter la coopération de la couronne de glissement inférieure 2 avec la surface en contact de la bobine 12, on prévoit un lamage 15 servant de guide à ladite couronne de glissement inférieure 2. Ce lamage 15 ne présente aucun caractère obligatoire mais sa réalisation dans la pièce moulée constituant le carter de la bobine 12 ne pose aucune difficulté.

Le dispositif de fixation ainsi constitué selon l'invention d'une rondelle frein élastique 1 coopérant avec un écrou 5 à l'extrémité d'un filetage épaulé 14 du tube 8 d'une électrovanne 9 sur laquelle on doit fixer une bobine 12 commandant l'ouverture et la fermeture de ladite électrovanne 9 présente une fiabilité et une maniabilité quasiment parfaites ; en particulier, la bobine 12 peut être réorientée par rotation à droite ou à gauche sans provoquer ni le sur-serrage, ni le desserrage de l'écrou 5.

L'invention n'est bien entendu pas limitée par la description ni par les dessins qui viennent d'en être donnés mais s'étend au contraire à toutes les formes de réalisation d'un dispositif de fixation prévoyant la coopération d'un moyen élastique fixé à l'extrémité du tube d'une électrovanne et présentant à sa partie inférieure une surface de glissement permettant la réorientation de la bobine autour dudit tube.

## Revendications

1. Dispositif de fixation d'une bobine (12) autour du tube (8) d'une électrovanne (9), caractérisée en ce qu'il comporte un moyen élastique pouvant être fixé de manière amovible sur le tube (8) de l'électrovanne (9) de manière à assurer une pression de serrage axiale constante sur la bobine (12), ce moyen élastique comportant à la partie en contact avec ladite bobine (12) une surface de glissement permettant la réorientation de ladite bobine (12) après serrage.

2. Dispositif de fixation selon la revendication 1, caractérisé en ce que le moyen élastique est solidarisé rigidement au tube (8) de l'électrovanne (9) par un écrou (5) serré contre une rondelle frein (4) agencée à l'autre partie supérieure dudit moyen élastique.

3. Dispositif de fixation selon la revendication 2, caractérisé en ce que le moyen élastique est constitué par le jeu de plusieurs bras flexibles (3) reliant la rondelle frein (4) à une surface de glissement du type d'une couronne annulaire inférieure (2) pouvant glisser sur la bobine (12) lors d'une réorientation du tube (8) de l'électrovanne (9) par rapport à cette dernière.

4. Dispositif de fixation selon la revendication 3, caractérisé en ce que les bras flexibles (3) possèdent une orientation radiale.

5. Dispositif de fixation selon la revendication 3, caractérisé en ce que les bras flexibles (3) sont disposés entre la couronne de glissement (2) et la rondelle frein (4) de sorte à leur donner la plus grande longueur possible.

6. Dispositif de fixation selon la revendication 5, caractérisé en ce que les bras flexibles (3) sont réalisés par emboutissage dans un flan plat d'acier à ressort suivant une découpe de forme polygonale s'inscrivant dans un cercle concentrique du cercle délimitant la circonférence extérieure de la couronne de glissement (2).

7. Dispositif de fixation selon la revendication 6, caractérisé en ce que les bras flexibles (3) sont réalisés suivant une découpe hexagonale procurant six bras flexibles (6) entre la rondelle frein supérieure (4) et la couronne de glissement (2).

8. Dispositif de fixation selon l'une quelconque des revendications 3 à 7, caractérisé en ce qu'après sa découpe dans un flan plat d'acier à ressort, le moyen élastique est développé dans une direction orthogonale pour former une rondelle frein élastique (1) sensiblement tronconique.

9. Dispositif de fixation selon la revendication 5, caractérisé en ce que les bras flexibles (3) sont réalisés par emboutissage dans un flan plat d'acier à ressort suivant une découpe de forme curviligne.

10. Dispositif de fixation selon l'une quelconque des revendications 2 à 9, caractérisé en ce que la rondelle frein (4) est constituée par une rondelle à crans à denture intérieure.

## Patentansprüche

1. Anordnung zur Befestigung einer Spule (12) um den Anker (8) eines Magnetventils (9), **dadurch gekennzeichnet**, daß sie ein elastisches Mittel aufweist, welches auf dem Anker (8) des Magnetventils (9) festsitzend angebracht werden kann, um einen konstanten axialen Schraubendruck auf die Spule (12) sicherzustellen, wobei das elastische Mittel als Teil eine Gleitoberfläche aufweist, die in Kontakt mit der Spule (12) steht und die Reorientierung der Spule (12) nach dem Verschrauben gestattet.

2. Befestigungsanordnung nach Anspruch 1, **dadurch gekennzeichnet**, daß das elastische Mittel mit dem Anker (8) des Magnetventils (9) über eine Schraube (5) fest verbunden ist, welche gegen eine runde Sperre (4) geschraubt ist, die an einem anderen, hervorragenden Teil des elastischen Mittels angeordnet ist.

3. Befestigungsanordnung nach Anspruch 2, **dadurch gekennzeichnet**, daß das elastische Mittel durch das Bewegungsspiel mehrerer flexibler Arme (3) gebildet wird, welche die runde Sperre (4) mit einer ringkranzförmigen Gleitoberfläche (2) verbinden, die bei einer Reorientierung des Ankers (8) des Magnetventils (9) auf der Spule (12) bezüglich dieser gleiten kann.

4. Befestigungsanordnung nach Anspruch 3, **dadurch gekennzeichnet**, daß die flexiblen Arme (3) eine radiale Orientierung aufweisen.

5. Befestigungsanordnung nach Anspruch 3, **dadurch gekennzeichnet**, daß die flexiblen Arme (3) zwischen dem Gleitkranz (2) und der runden Sperre (4) derart angeordnet sind, daß ihre Länge so groß wie möglich ist.

6. Befestigungsanordnung nach Anspruch 5, **dadurch gekennzeichnet**, daß die flexiblen Arme (3) gebildet sind durch Herausdrücken aus einem flachen Federstahlrohling gemäß einen Ausschnitt polygonaler Form, die einem Kreis einbeschrieben ist, der konzentrisch zu einem den äußeren Umfang des Gleitkranzes (2) begrenzenden Kreis ist.

7. Befestigungsanordnung nach Anspruch 6, **dadurch gekennzeichnet**, daß die flexiblen Arme (3) entsprechend einem hexagonalen Ausschnitt gebildet sind, der sechs flexible Arme (6) zwischen der runden herausragenden Sperre (4) und dem Gleitkranz (2) ergibt.

8. Befestigungsanordnung nach einem der Ansprüche 3 bis 7, **dadurch gekennzeichnet**, daß nach der Schnittbildung in einem flachen Rohling aus Federstahl das elastische Mittel in einer orthogonalen Richtung ausgeformt wird, um die runde elastische Sperre (1) leicht kegelstumpfförmig zu bilden.

9. Befestigungsanordnung nach Anspruch 5, **dadurch gekennzeichnet**, daß die elastischen Arme (3) durch Ausformen entsprechend einem gekrümmten Schnitt in einem flachen Federstahlrohling gebildet sind.

10. Befestigungsanordnung nach einem der Ansprüche 1 bis 9, **dadurch gekennzeichnet**, daß die runde Sperre (4) als innenverzahnte Zahnscheibe ausgebildet ist.

## Claims

1. Device for fastening a coil (12) around the tube (8) of a solenoid valve (9), characterized in that it comprises an elastic means which may be removably fastened on the tube (8) of the solenoid valve (9) so as to ensure a constant axial gripping pressure on the coil (12), this elastic means comprising in that part in contact with said coil (12) a slide surface allowing reorientation of said coil (12) after gripping.

2. Fastening device according to Claim 1, characterized in that the elastic means is rigidly connected to the tube (8) of the solenoid valve (9) by a nut (5) tightened against a spring washer (4) arranged in the other upper part of said elastic means.

3. Fastening device according to Claim 2, characterized in that the elastic means is constituted by the set of a plurality of flexible arms (3) connecting the spring washer (4) to a slide surface of the annular ring (2) type which may slide over the coil (12) upon reorientation of the tube (8) of the solenoid valve (9) with respect to the latter.

4. Fastening device according to Claim 3, characterized in that the flexible arms (3) present a radial orientation.

5. Fastening device according to Claim 3, characterized in that the flexible arms (3) are disposed between the slide ring (2) and the spring washer (4) so as to give them the greatest possible length.

6. Fastening device according to Claim 5, characterized in that the flexible arms (3) are made by stamping in a flat blank of spring steel following a polygonal cut-out inscribed in a circle concentric with respect to the circle defining the outer circumference of the slide ring (2).

7. Fastening device according to Claim 6, characterized in that the flexible arms (3) are made following a hexagonal cut-out providing six flexible arms (6) between the upper spring washer (4) and the slide ring (2).

8. Fastening device according to any one of Claims 3 to 7, characterized in that, after having been cut-out from a flat blank of spring steel, the elastic means is developed in an orthogonal direction to form a substantially truncated elastic spring washer (1).

9. Fastening device according to Claim 5, characterized in that the flexible arms (3) are made by stamping in a flat blank of spring steel following a curvilinear cut-out.

10. Fastening device according to any one of Claims 2 to 9, characterized in that the spring washer (4) is constituted by a washer with internally toothed notches.
